(19) Europäisches Patentamt
European Patent Office
Office européen des brevets

(11) Veröffentlichungsnummer: **0 229 954 B1**

(12) **EUROPÄISCHE PATENTSCHRIFT**

(45) Veröffentlichungstag der Patentschrift: **30.10.91**

(51) Int. Cl.$^5$: **B23K 20/00**, B23K 20/16, B21D 26/02

(21) Anmeldenummer: **86116889.6**

(22) Anmeldetag: **04.12.86**

# (54) Verfahren zur Herstellung von integralen Blechbauteilen aus hochfesten Aluminium-Legierungen.

(30) Priorität: **23.01.86 DE 3601868**

(43) Veröffentlichungstag der Anmeldung:
**29.07.87 Patentblatt 87/31**

(45) Bekanntmachung des Hinweises auf die Patenterteilung:
**30.10.91 Patentblatt 91/44**

(84) Benannte Vertragsstaaten:
**ES FR GB IT**

(56) Entgegenhaltungen:
**EP-A- 0 091 222**
**DE-A- 2 105 851**
**US-A- 3 121 785**
**US-A- 3 927 817**
**US-A- 4 087 037**
**AU-A- 508 279**
**GB-A- 939 871**
**US-A- 3 920 175**
**US-A- 3 993 238**
**US-A- 4 483 478**

(73) Patentinhaber: **DORNIER GMBH**
**Postfach 1420**
**W-7990 Friedrichshafen 1(DE)**

(72) Erfinder: **Sahm, Karl-Friedrich, Dr. Phys.**
**Friedrichshaferner Strasse 6a**
**W-7997 Immenstaad(DE)**
Erfinder: **Holbein, Reinhold, Dipl.-Ing.**
**Dornierstrasse 120**
**W-7990 Friedrichshafen(DE)**

(74) Vertreter: **Landsmann, Ralf, Dipl.-Ing.**
**Kleeweg 3**
**W-7990 Friedrichshafen 1(DE)**

EP 0 229 954 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft ein Verfahren zur Herstellung von intergralen Blechbauteilen aus hochfesten Aluminium-Legierungen durch Kombination von superplastischer Umformung und integraler Verbindungstechnik.

Hochfeste Aluminium-Legierungen erhalten durch spezielle thermomechanische Behandlung superplastische Eigenschaften, wodurch Umformgrade bis zu 1000 % erzielbar sind. Zum Beispiel findet ein solches Verfahren Anwendung bei der Herstellung von komplizierten Einzelteilen im Flugzeugbau, welche auf diese Weise relativ einfach herstellbar sind. Eine Verbindung derartig hergestellter Teile durch Nietverbindungen ergibt dann die zu fertigende Bauteilgruppe.

Hierzu wird eine Kombination von superplastischer Umformung und Diffusionslöten, Hartlöten oder Diffusionsschweißung angewendet, wodurch es möglich ist, die zusammengesetzten Strukturteile in einem Arbeitsgang zu fertigen. Nachteilig ist hierbei, daß die schwer lösliche Oxidschicht eine einwandfreie Verbindung bei den speziellen Arbeitsbedingungen und Legierungen erschwert und die Verwendung von Flußmitteln aus Korrosionsgründen im Flugzeugbau (Primär- und Sekundärstruktur) verboten ist.
Hinzu kommt, daß die Verbindung bei für die superplastische Umformung geeigneten Temperaturen eine ausreichende Festigkeit aufweisen muß.
Derzeit ist mit einem aus der US-A-39 27 817 bekannten Verfahren eine kombinierte Anwendung der superplastischen Umformung mittels der Diffusionsverbindungstechnik nur bei Titan-Legierungen möglich. Eine Diffusionsverschweißung ist bei dieser Legierung ohne jegliche Zwischenschichten möglich. Dabei ist die Erhaltung des superplastischen Gefüges während des Verbindungsvorganges gewährleistet. Bei hochfesten Aluminium-Legierungen ist die alleinige Anwendung der superplastischen Umformtechnik fertigungsreif entwickelt. Die reine Diffusionsverschweißung, wie sie bei der Titan-Legierung TiAl6V4 angewandt wird, ist bisher wegen der stabilen Oxidhäute nicht möglich.
Andere herkömmliche Verbindungstechniken (z.B. Hartlöten) sind wegen

- zu hoher Lotschmelztemperatur (ca. 580° C)
- Bildung von Grobkorn
- Zerstörung des superplastischen Gefüges
- ungenügende Benetzung von Lithium-haltigen Al-Legierungen
- ungenügende Diffusionsverhalten

ungeeignet.
Die notwendige Festigkeit bei der superplastischen Warmumformung ist bei der herkömmlichen Verbindungsart ebenfalls nicht gegeben.

Die **US-A-3,920,175** beschreibt ein Verfahren zur Herstellung von integralen Bauteilen durch Kombination superplastischer Umformung und Diffusionsschweißen unter Druck- und Temperatureinwirkung und dem Einsatz von Mitteln zur Verhinderung der Ausbildung einer Oxidschicht auf den miteinander zu verbindenden Flächen der Bauteile.

Durch die **US-A 3,993,238** ist ein Verfahren zur Diffusionsverbindung von Bauteilen aus Aluminiumlegierungen bekannt, nach dem nach Entfernung eines Oxidfilms eine Beschichtung aus Zink und eine zusätzliche Beschichtung aus Zinn und Kupfer aufgebracht und die Bauteile einer geeigneten Druck- und Temperatureinwirkung von 250° bis 300° C ausgesetzt werden.

Die **US-A-4,483,478** hat ein Verfahren zur Diffusionsverbindung in Kombination mit superplastischer Umformung von Bauteilen aus Aluminium oder Aluminiumlegierungen zum Gegenstand. Danach ist es bekannt, ausgewählte Bereiche der miteinander zu verbindenden Bauteile von der Verbindung auszuschließen.

Es ist ferner durch die **EP-A2-0 091 222** ein Verfahren zur Verbindung von Bauteilen aus Aluminium durch Diffusionsschweißen bekannt, nach dem die Beseitigung eines Oxidfilms auf den Flächen der miteinander zu verbindenden Bauteile durch Ionenbeschuß und nachfolgender Beschichtung z.B. mit Silber bewirkt werden soll.

Aufgabe der Erfindung ist es, ein Verfahren anzugehen, mit welchem hochfeste Aluminium-Legierungen in den Grenzbereichen der dazu verwendeten Metalle ohne Einschlüsse Von Oxiden und Verunreinigungen verbunden werden und ohne daß das Mikrogefüge der zu verbindenden Teile in einer für die superplastische Umformung nachteiligen Form beeinträchtigt wird. Ferner muß die Festigkeit der Verbindung während der superplastischen Umformung gegeben sein.

Zur Lösung der gestellten Aufgabe sind die Merkmale des Anspruchs 1 vorgesehen.
Vorteilhafte Weiterbildungen ergeben sich aus den Unteransprüchen.

Der Vorteil der Erfindung besteht darin, daß die zur Verbindung verwendeten Zwischenschichten unter Bildung niedrig schmelzender Phasen im Grenzbereich aufschmelzen und anschließend rekristallisieren. Ein Einschluß von Oxiden oder Verunreinigungen ist dabei ausgeschlossen. Durch Bildung von neuen metallischen Phasen während der Rekristallisation und vollständigen Diffusion der Zwischenschicht wird eine ausreichende Festigkeit bei der Umformtemperatur erzielt. Durch Auswahl geeigneter Zwischenschichtelemente und geringen Schichtdicken wird die Beibehaltung der herkömmlichen Legierungszusammensetzung im Grenzbereich im Rahmen der Legierungstoleranzen eingehalten.
Die Verbindung von hochfesten Al-Legierungen erfolgt hierbei durch die an sich bekannten Verbindungstechniken wie Diffusionslötung, Diffusionsschweißung oder Hartlötung, jedoch unter einer inerten Atmosphäre, z.B. einer Argonatmosphäre oder im Vakuum unter einem Druck von 20 bar bei 516° C bis 560° C für Legierungen aus AlMgZnCu bzw. bei 540° C bis 600°C für Legierungen aus AlCuMgLi. Dabei werden Zwischenschichten alternativ eingebracht oder erzeugt, wobei folgende Alternativen möglich sind:

1. Galvanische Beschichtung z.B. mit Kupfer, Bronze, Gold, Silber, Zinn oder Zink (d < 10 µm).
2. Einbringung von Folien wie z.B. Kupferfolien (d < 10 µm).
3. Einbringung von Loten in Pulverform mit und ohne Bindemittel.
4. Aufbringung von Reinaluminium (d < 10 µm) durch Aufplattieren oder durch Vakuumbedampfung oder galvanische Beschichtung oder Flammspritzen und eine anschließende Lotlegierungsbildung durch Ionenbestrahlung, wobei auch Bestandteile wie z.B. Wismut oder Germanium zulegiert werden können.
5. Ionenbeschuß des Grundwerkstoffs und Bildung einer niedrigschmelzenden Legierung im Oberflächengrenzbereich (max. 10 µm Dicke)
6. Sprengplattierung oder Sprengverschweißung.

Die Alternativen 1 bis 6 erfordern chemische Vorbehandlungen zur Beseitigung von Verunreinigungen und der vorhandenen Oxidschicht, wobei durch die Alternativen 4 und 5 noch vorhandene Restoxidschichten durch Ionenbeschuß vollständig beseitigt werden.

Durch die Verschweißung im Vakuum oder einer inerten Atmosphäre wird eine erneute Oxidation der Oberfläche verhindert.

Alle Alternativen dienen dem Ziel, durch Bildung einer niederschmelzenden Legierung im Grenzbereich ein Aufreißen der Restoxidschicht zu ermöglichen, und durch Diffusion der Legierungsbestandteile eine vollständige Rekristallisation des Grenzbereichs zu erhalten, die wiederum die notwendige Warmzugfestigkeit für die anschließende superplastische Umformung gewährleistet.

Ausführungsbeispiele sind folgend beschrieben und durch Skizzen erläutert:

| | |
|---|---|
| Figur 1a bis g | zeigt die Reihenfolge der Herstellung eines Bauteils mit Primärverbindung zweier Blechbauteile, |
| Figur 2a bis e | zeigt die Reihenfolge der Herstellung eines Bauteils mit Sekundärverbindung zweier Blechbauteile, |
| Figur 3a bis e | zeigt eine Variante gemäß Figur 2a bis 2e, |
| Figur 4a bis g | zeigt die Reihenfolge der Herstellung eines Bauteils mit Kombination aus Primär- und Sekundärverbindung. |

Die aus Figur 1 ersichtlichen Blechbauteile 1 und 2 werden bei Primärverbindung zunächst durch eine Kombination von Schleifen, Reinigen und Beizen flächig vorbehandelt. Anschließend werden die Bleche 1, 2 einseitig mit einem Tauchlack 3 beschichtet und nach dessen Trocknung werden die nicht miteinander zu verschweißenden Bereiche der Bleche 1, 2 freigelegt und mit einem Trennmittel 4 (z.B. Bornitrid) beschichtet (Figur 1a, b, c). Es folgt dann die Entfernung des Tauchlackes 3. Das anschließende Einlegen erfolgt unter Einbringung einer Folie oder eines Pulvers oder einer Paste 5 an den zu verbindenden Bereichen in ein zu beheizendes Gesenk 6. Nach Aufheizung auf ca. 516° C unter ständigem Spülen mit Schutzgas 7 werden die Bleche 1, 2 mit ca. 20 bis 25 bar Druck entsprechend Figur 1e beaufschlagt. Durch Erzeugung eines definierten Druckverlaufes von 0,1 bis 10 bar mittels Einblasung von Argon zwischen die Bleche 1 und 2 (Figur 1f) wird das Bauteil 8 ausgeformt und kann nach Abkühlung auf ca. 300° C dem Gesenk 6 entnommen werden (Figur 1g).

Bei Sprengverschweißung werden die Bleche 1 und 2 entsprechend der Reihenfolge Figur 1a, b oder Figur 1a bis c vorbehandelt und mit Tauchlack 3 und Trennmittel 4 beschichtet. Nach vollständiger Entfernung des Tauchlackes 3 werden die Bleche 1, 2 in einer in der Figur nicht gezeigten Sprengschweißanalyse örtlich miteinander verbunden. Nach Einlegen in das Gesenk 6 werden die Bleche 1, 2 entsprechend der Reihenfolge Figur 1f, g umgeformt.

Die aus Figur 2 ersichtlichen Blechbauteile 1 und 2 werden bei Sekundärverbindung und wie in Figur 1a, b, c beschrieben, zunächst durch eine Kombination von Schleifen, Reinigen und Beizen flächig vorbehandelt. Anschließend wird Blech 1 einseitig mit Tauchlack 3 beschichtet und nach Trocknung des Lackes 3 werden die zu verschweißenden Bereiche freigelegt und zusammen mit Blech 2 (als Verstärkung) durch z.B. galvanische Verfahrensweise mit einer Zwischenschicht 9 versehen (Figur 2a). Nach Entfernung des restlichen Tauchlackes 3 werden die Bleche 1, 2 entsprechend Figur 2b in das Gesenk 6 eingelegt. Nach Aufheizung auf ca. 516° C unter ständigem Spülen mit dem Schutzgas 7 wird Blech 1 superplastisch mit einem Druckverlauf von 0,1 bis 10 bar umgeformt (Figur 2c). Nach vollständiger Umformung wird der Druck auf 20 bis 25 bar erhöht und somit Blech 1 und 2 verbunden (Figur 2d). Nach Abkühlung auf ca. 300° C wird das fertige Bauteil 8 dem Gesenk 6 entnommen (Figur 2e).

Aus Figur 3 ist die Herstellung eines Bauteils 8 mit Sekundärverbindung als Variante gemäß Figur 2 ersichtlich. Die Vorgehensweise bei der Vorbehandlung und der Beschichtung ist dem Verfahrensablauf gleich dem in Figur 2 beschriebenen (Figur 3a). Nach der Aufbringung der Zwischenschichten 9 erfolgt das Einlegen in das Gesenk 6 (Figur 3b). Die anschliessende Umformung erfolgt bei ca. 20° C unterhalb der Verbindungstemperatur mit 0,1 bis 10 bar (Figur 3c). Nach vollständiger Unformung an Blech 1 und 2 wird die Temperatur erhöht und die Verbindung bei 20 bis 25 bar vorgenommen (Figur 3d). Nach Abkühlung wird das fertige Bauteil 8 aus dem Gesenk 6 entnommen (Figur 3e).

Die aus Figur 4 ersichtlichen Blechbauteile 1, 2 und ein zusätzliches Verstärkungsblech 10 werden bei Kombination von Primär- und Sekundärverbindunggemäß der in Figur 1a, b, c beschriebenen Reihenfolge vorbehandelt. Zusätzlich wird das Verstärkungsblech 10 mit der Zwischenschicht 9 versehen und in das Gesenk 6 eingelegt (Figur 4d). Der Einbau und die Umformung der Bleche 1, 2 erfolgt entsprechend Figur 1d, e, f. Nach erfolgter Umformung der Bleche 1, 2 wird der Druck innerhalb der miteinander verbundenen Blechbauteile 1, 2 auf 20 bis 25 bar erhöht (Figur 4g), wobei eine feste Verbindung zwischen dem Blech 1 und dem Verstärkungsblech 10 erfolgt. Nach Beendigung des Verbindungsvorganges und Abkühlung des Gesenkes 6 wird das fertige Bauteil 8 daraus entnommen (Figur 4h).

## Patentansprüche

1. Verfahren zur Herstellung von integralen Blechbauteilen durch Kombination von superplastischer Umformung und Diffusionsschweißen bzw. Diffusionslöten unter Druck- und Temperatureinwirkung und Einsatz von Mitteln zur Verhinderung der Ausbildung oder zum Aufbrechen einer bereits vorhandenen Oxidationsschicht auf den Flächen der miteinander zu verbindenden Blechbauteile, **dadurch gekennzeichnet,** daß
   - unter Einsatz von hochfesten Aluminiumlegierungen für die miteinander zu verbindenden Blechbauteile **(1,2)**
   - die Bauteiloberflächen gereinigt und
   - die vor oder nach erfolgter Umformung durch
     - Galvanisieren,
     - Walz- oder Sprengplatieren,
     - Ionenbestrahlen,
     - Vakuum-Plasmaspritzen,
     - Aufdampfen, oder einer ähnlichen Behandlung mit einer Zwischenschicht versehen und/bzw. oder

     in Form von
     - Folien,
     - Pulvern oder Pasten oder ähnlichem,

     im Vakuum oder in einer inerten Atmosphäre durch Drücke zwischen 20 und 25 bar und Temperaturen zwischen 516° C und 600° C oder durch
     - Sprengschweißen

     miteinander verbunden werden, wobei die Zwischenschicht (9) mit einem Oxidationsschutz aus
     - Cu, Ag, Au

     oder mittels
     - Flüssigphasen bildender Metalle bzw.
     - niedrig schmelzender Lote

     gebildet ist.

2. Verfahren nach Anspruch 1, gekennzeichnet durch
   - Aufbringen von Trennmitteln bzw. Trennschichten (4) auf Flächenabschnitte der Bauteile (1, 2) die von einer Verbindung miteinander ausgeschlossen sein sollen und
   - durch eine lokale, bei Umformtemperatur belastbare Verbindung der Blechbauteile (1, 2) durch Druck und Temperatur vor und bzw. oder nach der superplastischen Umformung.

3. Verfahren nach einem der vorangehenden Ansprüche, dadurch gekennzeichnet, daß die Zwischenschicht (9) vollständig in den Grundwerkstoff (Al-Legierung) der Blechbauteile (1, 2) eindiffundiert.

4. Verfahren nach einem der vorangehenden Ansprüche, gekennzeichnet durch Plattieren der miteinander zu verbindenden Flächenabschnitte der Blechbauteile (1, 2) mit Reinaluminium.

5. Verfahren nach einem der vorangehenden Ansprüche, dadurch gekennzeichnet, daß die Zwischenschicht (9) Hartlote sind und aus Legierungen AlMg, AlGeSi oder AlLi bestehen.

6. Verfahren nach einem der vorangehenden Ansprüche, dadurch gekennzeichnet, daß die Zwischenschicht (9) im Grundwerkstoff durch Ionenbestrahlung mit geeigneten Legierungssätzen direkt erzeugt wird.

7. Verfahren nach einem der vorangehenden Ansprüche, dadurch gekennzeichnet, daß die Zwischenschicht (9) durch kombinierte Anwendung der Ionenbestrahlung und Vakuumverdampfung oder galvanische Beschichtung erzeugt wird, wobei durch Ionenbestrahlung zusätzliche Legierungsbestandteile eingebracht werden.

8. Verfahren nach einem der vorangehenden Ansprüche, dadurch gekennzeichnet, daß die Lotbildung in der Plattierschicht durch Ionenimplantation erfolgt, wobei Cu, Mg, Si, Bi, Ge, Li oder Au eingebracht wird.

9. Verfahren nach einem der vorangehenden Ansprüche, dadurch gekennzeichnet, daß die zu verbindende Legierung aus AlZnMgCu oder AlLiMgCu besteht.

## Claims

1. Method of manufacturing integral tin construction elements by combining super plastic forming and diffusion welding or diffusion soldering under the influence of pressure and temperature and the use of agents which prevent the forming of an oxidation layer on the surfaces of the tin construction elements to be connected or, if already existing, break it up, characterised in that

   - by using highly solid aluminium alloys for the tin construction elements (1, 2) to be connected
   - the element surfaces are cleaned and are provided with an intermediate layer before or after forming by
   - galvanising
   - roller or blasting plating,
   - ion radiation,
   - vacuum plasma injection,
   - vapouring, or a similar method and/or are connected to one another in the form of
   - foils,
   - powders or pastes or the like,
     in a vacuum or in an inert atmosphere by pressures between 20 and 25 bar and temperatures between 516° C and 600° C or by
   - blasting welding, whereby the intermediate layer (9) is formed with an oxidation protection of
   - Cu, Ag, Au
     or by means of
   - metals forming aqueous phases or
   - low-melting solders.

2. Method according to claim 1, characterised in that

   - separating agents or separating layers (4) are disposed on surface sections of the construction elements (1, 2) which are not designed to be connected to one another and
   - a local connection of the tin construction elements (1, 2) by pressure and temperature before and/or after the super plastic forming, which connection can be stressed under forming temperatures.

3. Method according to any one of the preceding claims, characterised in that the intermediate layer (9) diffuses completely into the basic material (Al alloy) of the tin construction elements (1, 2).

4. Method according to any one of the preceding claims, characterised by plating the surface sections of the tin construction elements (1, 2) to be connected with pure aluminium.

5. Method according to any one of the preceding claims, characterised in that the intermediate layer (9) is hard solder and consists of alloys AlMg, AlGeSi or AlLi.

6. Method according to any one of the preceding claims, characterised in that the intermediate layer (9) in the basic material is directly generated by ion radiation with suitable alloy contributions.

7. Method according to any one of the preceding claims, characterised in that the intermediate layer (9) is generated by combined application of ion radiation and vacuum evaporation or galvanic coating, whereby additional alloy components are introduced by ion radiation.

8. Method according to any one of the preceding claims, characterised in that the forming of solder occurs in the plating layer by ion implantation whereby Cu, Mg, Si, Bi, Ge, Li or Au are introduced.

9. Method according to any one of the preceding claims, characterised in that the alloy to be connected consists of AlZnMgCu or AlLiMgCu.

## Revendications

1. Procédé de fabrication d'éléments de construction intégraux en tôle par la combinaison de la déformation superplastique et du soudage et respectivement du brasage par diffusion sous pression et par l'effet de température et la mise en oeuvre de moyens pour empêcher la formation ou pour rompre une couche d'oxydation déjà existante sur les surfaces des éléments de construction en tôle à réunir, **caractérisé en ce** que, avec mise en oeuvre d'alliages d'aluminium hautement résistants pour les éléments de construction en tôle (1, 2) à réunir, les surfaces des éléments de construction sont nettoyées et munies, avant ou après la déformation, d'une couche intermédiaire appliquée par galvanisation, plaquage par laminage ou explosion, bombardement ionique, projection au plasma sous vide, métallisation ou par un traitement analogue, et/ou réunies, sous forme de feuilles, de poudres, de pâtes ou analogues sous vide ou sous une atmosphère inerte, par application de pressions comprises entre 20 et 25 bars et de températures comprises entre 516°C et 600°C ou par soudage par explosion, la couche intermédiaire (9) étant constituée par un antioxydant composé de Cu, Ag, Au ou au moyen de métaux formant des phases liquides et respectivement par des métaux d'apport de brasage à bas point de fusion.

2. Procédé selon la revendication 1, caractérisé par l'application d'agents et respectivement de couches de séparation (4) sur des sections de surface des éléments de construction (1, 2) lesquels doivent être exclus d'une liaison mutuelle, et par une liaison locale des éléments de construction (1, 2) en tôle par compression et traitement thermique avant et/ou après la déformation superplastique, qui peut être soumise à une charge à la température de déformation.

3. Procédé selon l'une quelconque des revendications précédentes, caractérisé en ce que la couche intermédiaire (9) diffuse complètement à l'intérieur du matériau de base (alliage d'aluminium) des éléments de construction en tôle (1, 2).

4. Procédé selon l'une quelconque des revendications précédentes, caractérisé par le plaquage des sections de surface à réunir des éléments de construction en tôle (1, 2) avec de l'aluminium pur.

5. Procédé selon l'une quelconque des revendications précédentes, caractérisé en ce que la couche intermédiaire (9) est constituée de métaux d'apport de brasage fort et composée des alliages AlMg, AlGeSi ou AlLi.

6. Procédé selon l'une quelconque des revendications précédentes, caractérisé en ce que la couche intermédiaire (9) est réalisée directement dans le matériau de base par bombardement ionique avec des systèmes d'alliage appropriés.

7. Procédé selon l'une quelconque des revendications précédentes, caractérisé en ce que la couche intermédiaire (9) est réalisée par l'application combinée du bombardement ionique et de la métallisation sous vide ou de la galvanoplastie, des composants d'alliage supplémentaires étant introduits par bombardement ionique.

8. Procédé selon l'une quelconque des revendications précédentes, caractérisé en ce que la formation de métal d'apport de brasage dans la couche de plaquage se fait par implantation d'ions, avec mise en oeuvre de Cu, Mg, Si, Bi, Ge, Li ou Au.

9. Procédé selon l'une quelconque des revendications précédentes, caractérisé en ce que l'alliage à combiner se compose de AlZnMgCu ou de AlLiMgCu.

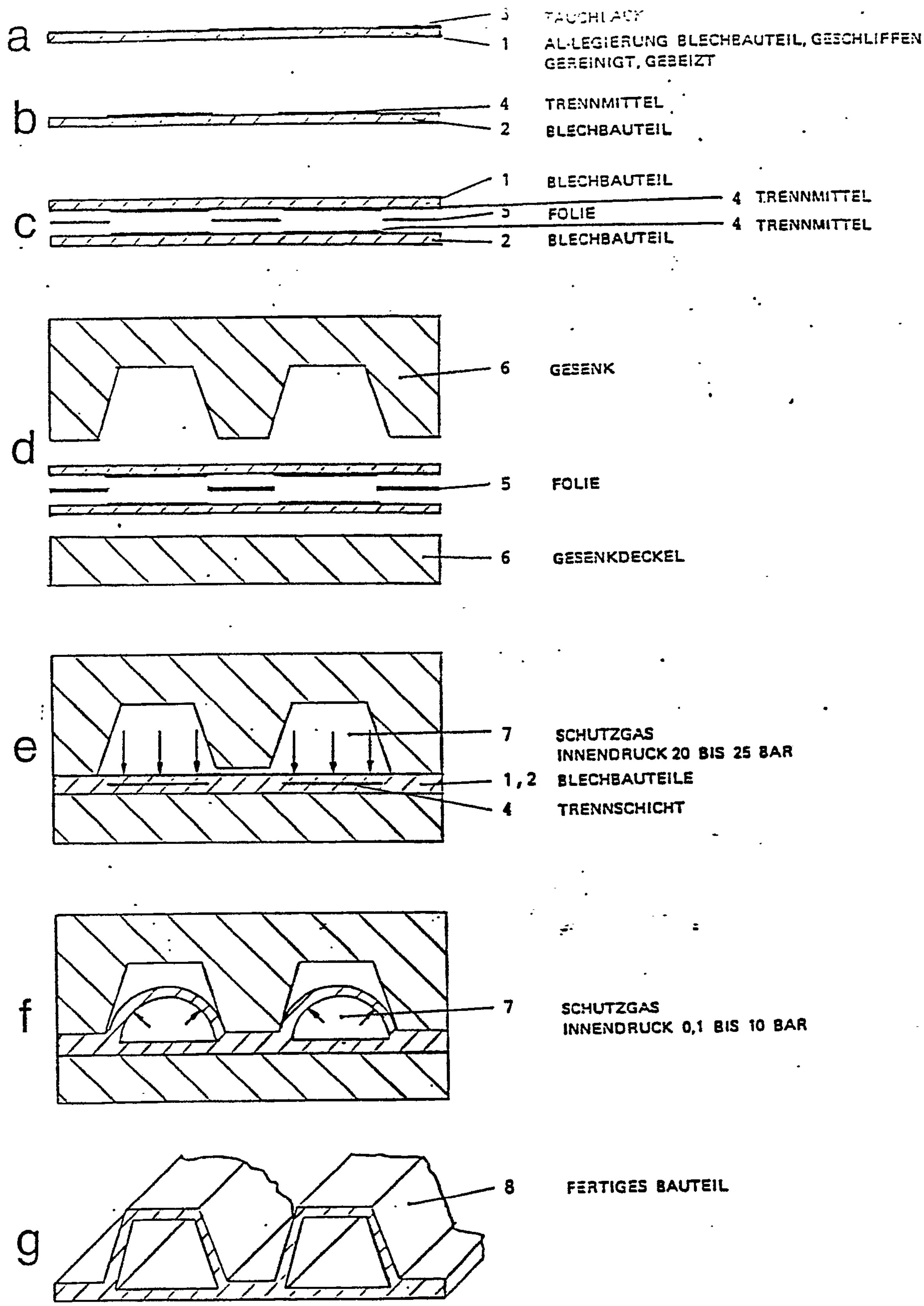
a
3 TAUCHLACK
1 AL-LEGIERUNG BLECHBAUTEIL, GESCHLIFFEN GEREINIGT, GEBEIZT
b
4 TRENNMITTEL
2 BLECHBAUTEIL
c
1 BLECHBAUTEIL
4 TRENNMITTEL
5 FOLIE
4 TRENNMITTEL
2 BLECHBAUTEIL
d
6 GESENK
5 FOLIE
6 GESENKDECKEL
e
7 SCHUTZGAS INNENDRUCK 20 BIS 25 BAR
1, 2 BLECHBAUTEILE
4 TRENNSCHICHT
f
7 SCHUTZGAS INNENDRUCK 0,1 BIS 10 BAR
g
8 FERTIGES BAUTEIL

Fig. 1

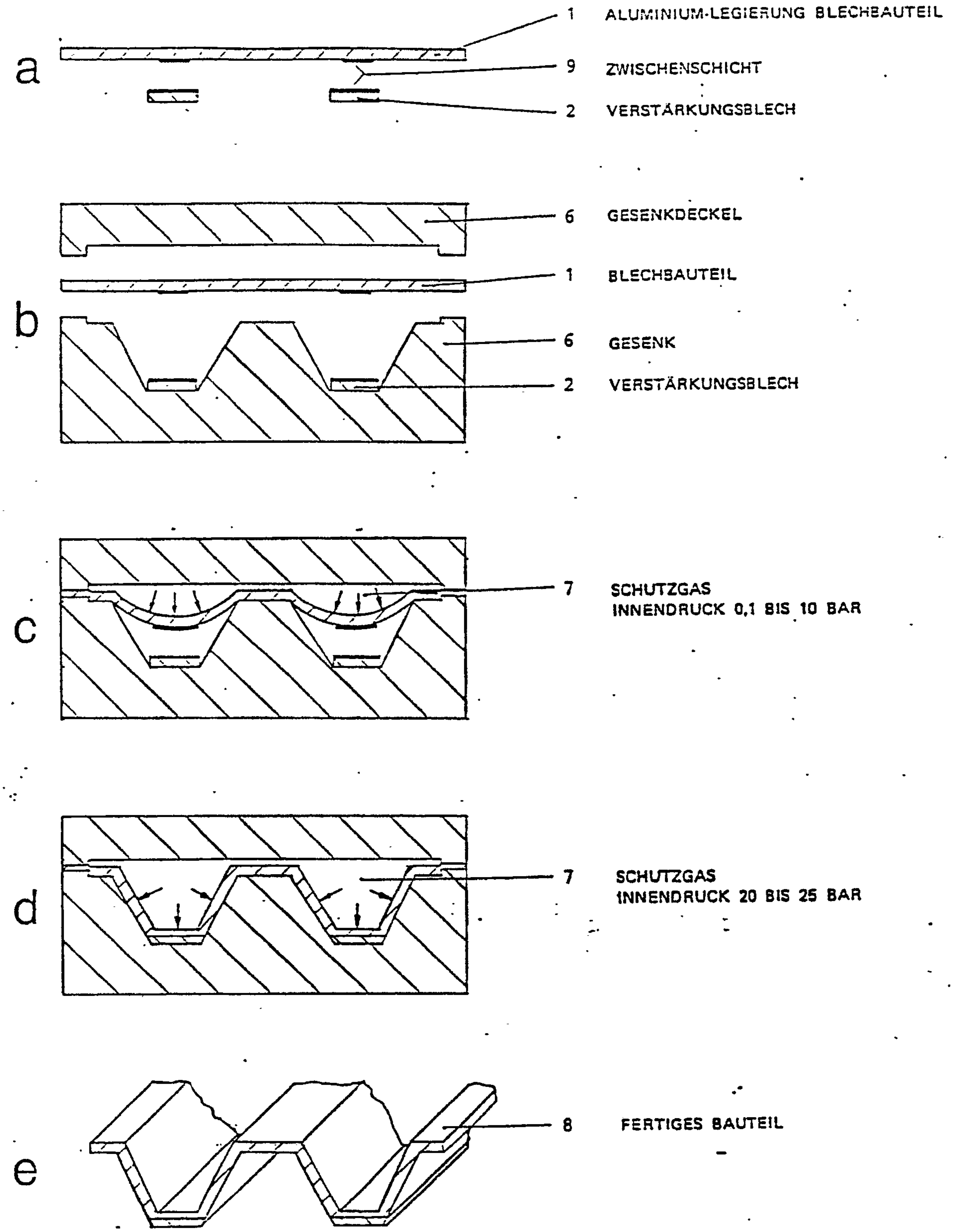
a
1 ALUMINIUM-LEGIERUNG BLECHBAUTEIL
9 ZWISCHENSCHICHT
2 VERSTÄRKUNGSBLECH
b
6 GESENKDECKEL
1 BLECHBAUTEIL
6 GESENK
2 VERSTÄRKUNGSBLECH
c
7 SCHUTZGAS
INNENDRUCK 0,1 BIS 10 BAR
d
7 SCHUTZGAS
INNENDRUCK 20 BIS 25 BAR
e
8 FERTIGES BAUTEIL

Fig. 2

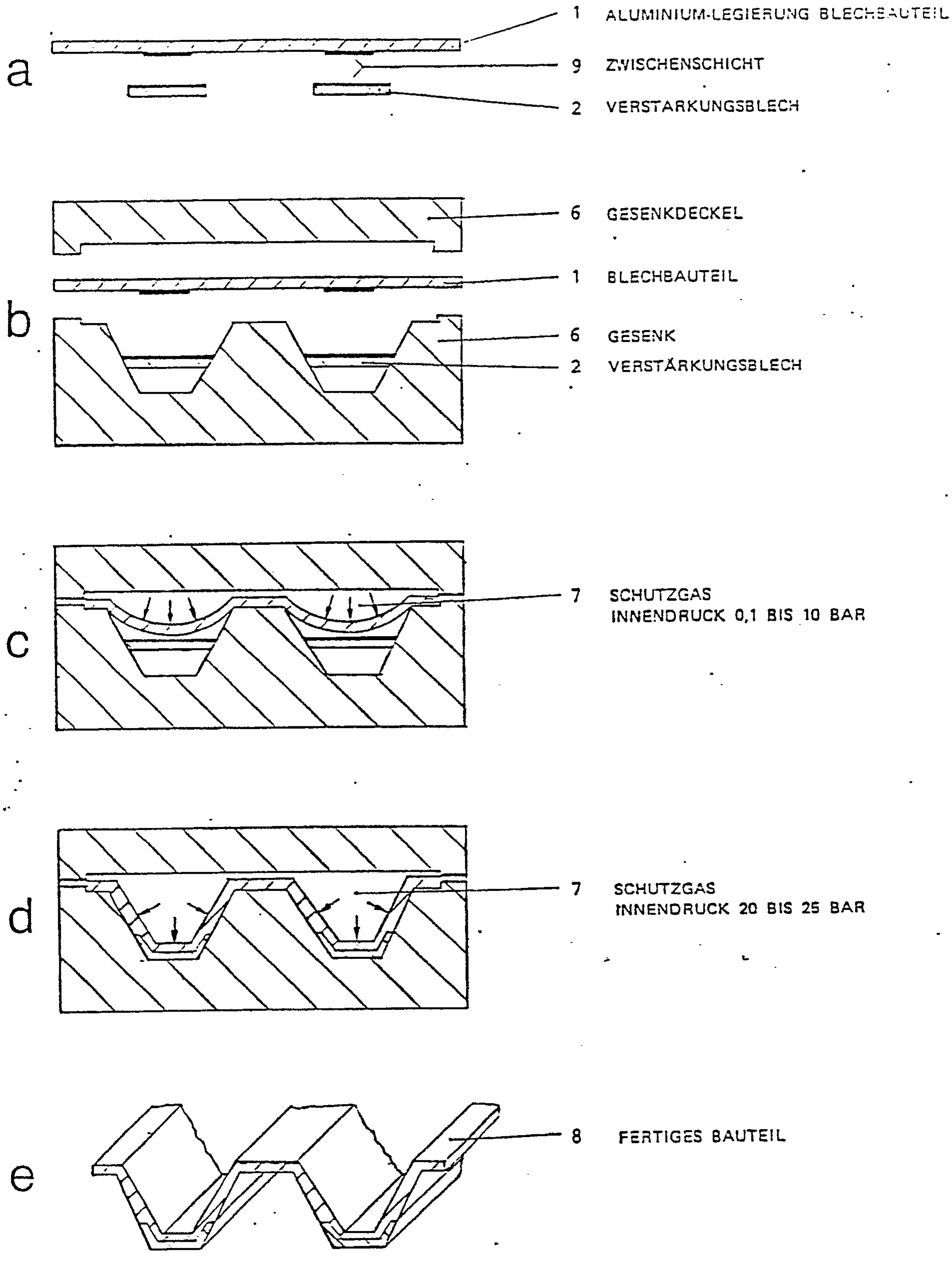
a
1 ALUMINIUM-LEGIERUNG BLECHBAUTEIL
9 ZWISCHENSCHICHT
2 VERSTARKUNGSBLECH
b
6 GESENKDECKEL
1 BLECHBAUTEIL
6 GESENK
2 VERSTÄRKUNGSBLECH
c
7 SCHUTZGAS
INNENDRUCK 0,1 BIS 10 BAR
d
7 SCHUTZGAS
INNENDRUCK 20 BIS 25 BAR
e
8 FERTIGES BAUTEIL

Fig. 3

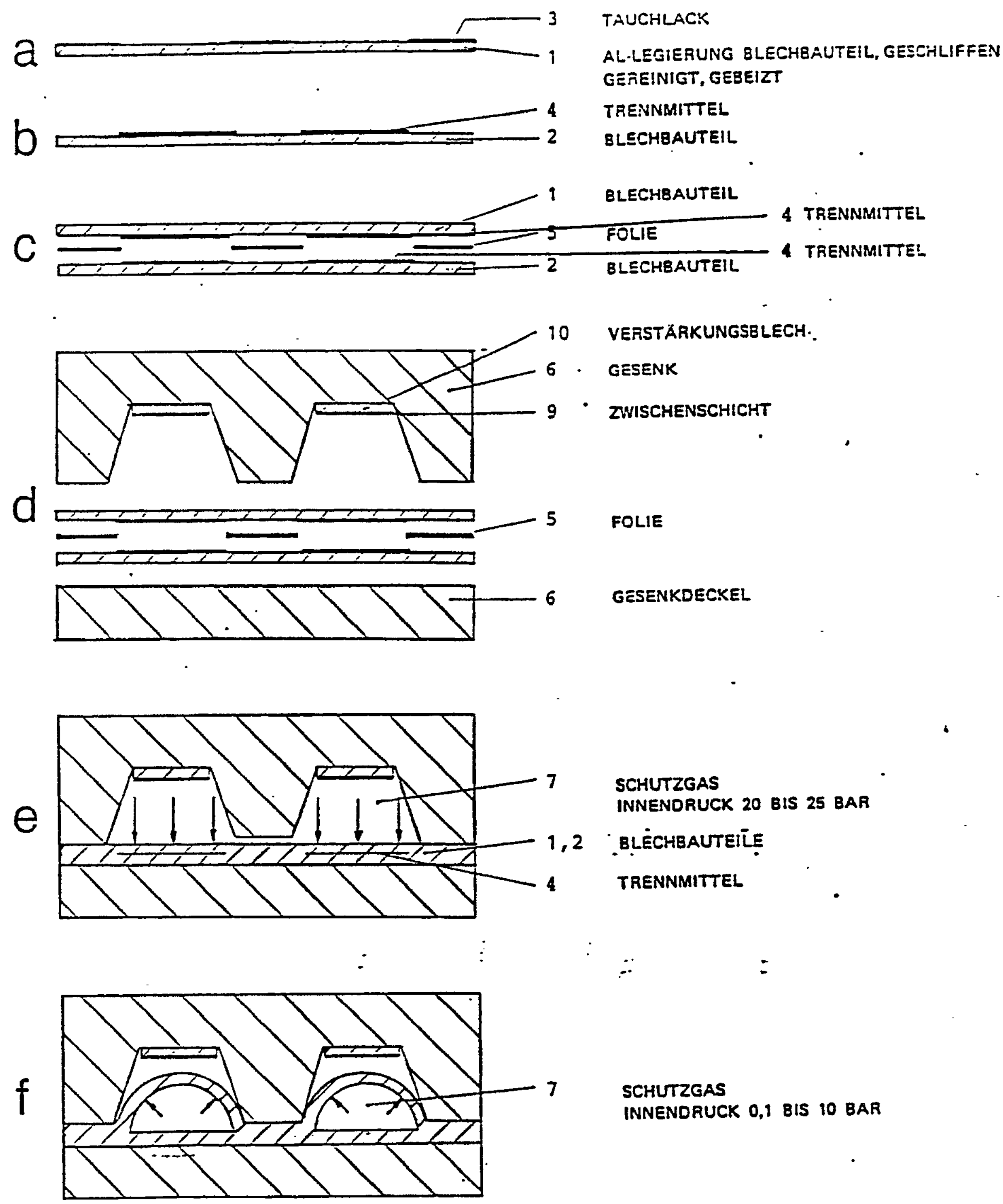
a
3
TAUCHLACK
1
AL-LEGIERUNG BLECHBAUTEIL, GESCHLIFFEN GEREINIGT, GEBEIZT
b
4
TRENNMITTEL
2
BLECHBAUTEIL
c
1
BLECHBAUTEIL
4 TRENNMITTEL
5
FOLIE
4 TRENNMITTEL
2
BLECHBAUTEIL
d
10
VERSTÄRKUNGSBLECH
6
GESENK
9
ZWISCHENSCHICHT
5
FOLIE
6
GESENKDECKEL
e
7
SCHUTZGAS
INNENDRUCK 20 BIS 25 BAR
1,2
BLECHBAUTEILE
4
TRENNMITTEL
f
7
SCHUTZGAS
INNENDRUCK 0,1 BIS 10 BAR

Fig. 4

g

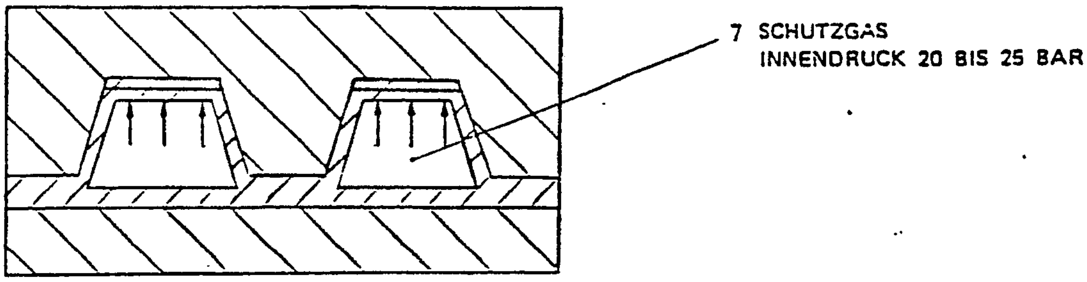


h

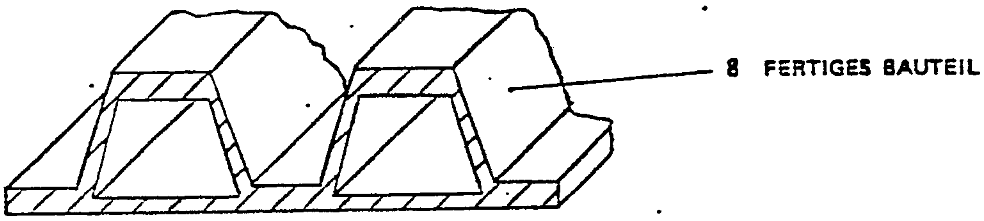


Fig. 4